# FASCICULE DE BREVET EUROPEEN

(11) **EP 1 713 152 B1**
(45) Date de publication et mention de la délivrance du brevet: **17.07.2013**
(21) Numéro de dépôt: 06111238.9
(22) Date de dépôt: 16.03.2006
(51) Int. Cl.: H02B 11/12

(54) **Système de commande d'appareils électriques moyenne tension**
Steuerungssystem für elektrische Geräte der Mittelspannungstechnik
Control system for medium voltage electrical equipment

(30) Priorité: 22.03.2005 FR 0550742
(43) Date de publication de la demande: 18.10.2006
(73) Titulaire: Schneider Electric Energy France, 92500 Rueil Malmaison (FR)
(72) Inventeur: Lecocq, Christophe, 34000 Montpellier (FR); Astruc, Nicolas, 34160 Castries (FR)
(74) Mandataire: Augarde, Eric

(56) Documents cités:
- DE-A1- 19 542 979

## Description

### DOMAINE TECHNIQUE

L'invention concerne un système de commande d'appareils électriques applicable notamment dans la commande d'appareils de fortes puissances et fonctionnant à moyennes tensions (à 7,2kV par exemple).

La commutation à de telles tensions nécessite de prendre des mesures de sécurité pour se prémunir contre les risques de formations d'arcs électriques et d'explosions.

### ÉTAT DE LA TECHNIQUE ANTÉRIEURE

Il est habituel de disposer les appareillages de commutation dans des compartiments superposés dans des cellules multi-étages comme par exemple dans le brevet DE 195 42 979. Ces compartiments sont constitués d'une enveloppe métallique présentant un indice de protection contre la pénétration d'au moins IP2X (ce qui correspond à un objet de diamètre supérieur à 12mm selon la norme CEI 60529).

Pour l'alimentation électrique des dispositifs de commutation et des appareils à commander, il est couramment prévu un jeu de barres d'alimentation électrique disposées horizontalement, au travers de plusieurs cellules. Chaque cellule est associée à un jeu de barres verticales connectées aux barres horizontales et permettant de distribuer l'alimentation électrique aux différents étages de la cellule.

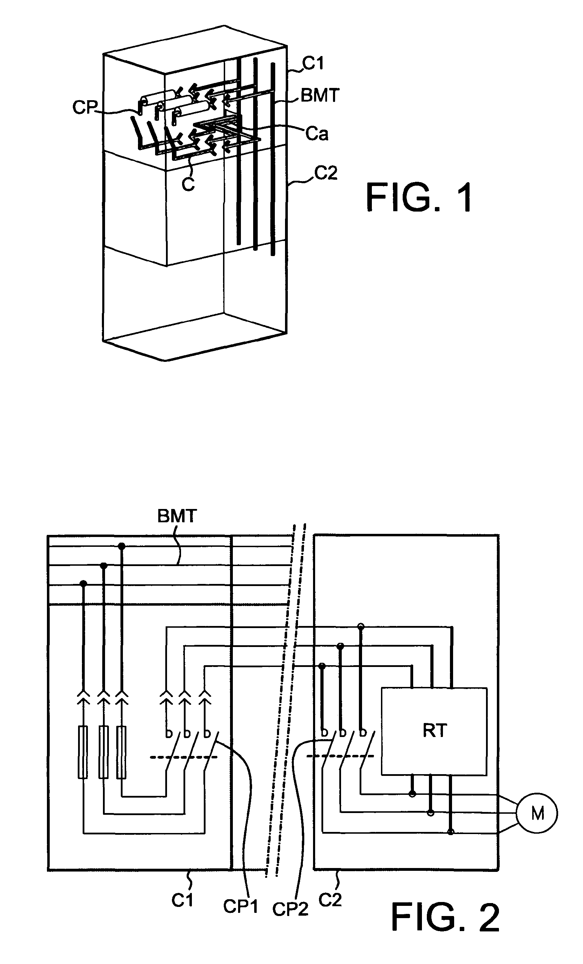

La figure 1 représente un exemple de cellule comportant dans des compartiments C1, C2 des barres d'alimentation BMT, un ou plusieurs appareillages CP de commutation électrique, des liaisons de puissances par câble Ca et un compartiment contrôle commande non représenté.

La commande de certains appareils électriques nécessite plusieurs phases de fonctionnement. Notamment, il est connu que la commande de démarrage d'un moteur électrique de forte puissance ou l'inversion de son sens de rotation nécessite fréquemment le fonctionnement en séquence de plusieurs appareils de commutation permettant d'insérer et/ou de shunter des charges de limitation du courant d'alimentation du moteur.

Les appareils de commutation sont souvent des contacteurs. Lorsque deux contacteurs sont disposés en série sur un circuit d'alimentation d'un appareil électrique à commander (moteur par exemple), les entrées d'un premier contacteur sont connectées au jeu de barres fournissant l'alimentation électrique. Ses sorties sont en règle générale connectées à un moteur, à un dispositif de réduction de tension, à un autre contacteur ou à une combinaison des éléments précités. Les entrées et sorties des autres contacteurs sont en règle générale connectées à un moteur, à un dispositif de réduction de tension, à un autre contacteur, à une combinaison des éléments précités mais jamais au jeu de barre.

La figure 2 représente un exemple de circuit de démarrage d'un moteur M à l'aide de deux appareillages de commutation électrique CP1 et CP2 en série situés dans des cellules C1, C2 respectivement. L'appareillage de commutation électrique CP2 est destiné à shunter un dispositif de réduction de tension RT.

Dans l'exemple de circuit de démarrage de moteur représenté figure 2, le dispositif de réduction de tension RT est logé dans la cellule C2.

Dans la configuration décrite en relation avec la figure 2, le premier appareillage CP1 de commutation électrique situé dans une cellule peut être débrochable, mais le deuxième appareillage de commutation électrique CP2, qui est généralement situé dans une cellule voisine, n'est pas débrochable.

Il apparaît en effet que, dans les techniques connues, tous les appareils débrochables ont généralement leurs entrées connectées au jeu de barres d'alimentation, tandis que les autres appareils ne sont pas nécessairement débrochables. Cela tient au fait que la liaison entre les barres d'alimentation et un appareil, par exemple de commutation électrique se fait de façon standard par l'intermédiaire d'un appareil de protection. Il est donc possible de le prévoir à l'avance et de préparer en usine un appareil débrochable. Les autres appareillages notamment les contacteurs shunt sont situés dans une autre cellule. Ces appareillages de commutation ne sont généralement pas débrochables parce que ladite cellule logeant l'appareillage de commutation et éventuellement un réducteur de tension est réalisé de façon spécifique à la demande du client. Les sorties du premier appareillage de commutation sont reliés à la cellule spécifique par câbles externes aux cellules. Autrement dit la première cellule, celle connectée aux barres peut être réalisée à l'avance de façon standard. Une seconde cellule est réalisée de façon spécifique. Ainsi, sauf cas exceptionnel, les connexions nécessaires entre la première et la seconde cellule se font par câble externe, à réaliser sur le site.

Les cellules sont transportées vers le site d'implantation individuellement, ou par regroupement partiel. Pour celles qui ne sont pas débrochables, la nécessité de réaliser les câblages de liaison externe sur site est un facteur notable de risque de défaillances. De plus, en cas de défaillance d'un appareillage de commutation électrique, celui-ci doit être décâblé, ce qui implique une opération relativement longue et ce qui rend l'appareil électrique commandé indisponible pendant tout le temps de l'intervention.

Les cellules connues nécessitent un accès arrière ce qui interdit de les adosser à un mur ou une paroi, ce qui implique une surface d'emprise au sol supérieure à celle d'une cellule que l'on peut adosser à un mur.

### EXPOSÉ DE L'INVENTION.

L'invention a pour objet un agencement de cellule multi-étages qui peut être adossé à une paroi et qui permette dans tous les cas le débrochage des appareillages de commutation électrique. Il est précisé que selon l'invention le caractère débrochable de chacun des appareillages est obtenu tout en conservant une possibilité d'interconnexion entre les différents appareillages de commutation électrique situés dans des compartiments différents d'une même cellule, et ceci quel que soit l'emplacement des compartiments à interconnecter.

Selon l'invention toutes les cellules peuvent être préparées en usine et assemblées sur site d'implantation par de simple opération de montage et d'embrochage. Seuls subsistent les opérations de câblage des cellules vers les appareils externes aux cellules par exemple vers les moteurs à commander.

À toutes ces fins, l'invention est relative à un système de commande d'appareils électriques comprenant une cellule comportant des barres de distribution d'énergie électrique moyenne tension, des appareillages de commutation électrique, des câbles électriques de liaison vers des appareils électriques à commander. Une telle cellule comporte une face avant accessible par l'utilisateur et une face arrière opposée à la face avant. Selon l'invention, cette cellule comporte:
- au moins un compartiment arrière situé dans une région arrière de la cellule affleurant la face arrière et permettant le passage des barres de distribution de l'énergie électrique moyenne tension,
- un ou plusieurs compartiment(s) avant situé(s) dans une région avant de la cellule affleurant la face avant, et empilés verticalement lorsque la cellule comporte plusieurs compartiments avant, chaque compartiment définissant dans ce cas un étage de la cellule, le(s) compartiment(s) avant comportant un ou plusieurs appareillages de commutation électrique de commande d'au moins un appareil électrique à commander,
- un ou plusieurs compartiment(s) intermédiaire (s) situé (s) entre le (s) compartiment (s) arrière(s) et le(s) compartiment(s) avant et permettant le passage de câbles électriques de liaison permettant de relier les appareillages de commutation électrique de commande audit appareil électrique à commander,
- un volume également situé entre le (s) compartiment(s) arrière(s) et le(s) compartiment(s) avant, à côté du ou des compartiment(s) intermédiaire(s), et logeant une ou plusieurs extension(s) de compartiment(s) avant, arrière ou intermédiaire.
- Des traversées de cloison , situées dans le(s) compartiment(s) avant(s) ou dans une de leur(s) extension(s) et débouchant dans le compartiment arrière ou intermédiaire ou dans une de leur(s) extension(s), permettant de connecter un appareillage débrochable situé dans un compartiment avant avec le jeu de barre site dans le compartiment arrière et/ou les cables de liaison situés dans le compartiment intermédiaire.

Ainsi selon l'invention un volume D délimité entre les compartiments avant, arrière et intermédiaire est occupé par une ou plusieurs extensions de compartiments. Une même extension de compartiment peut occuper un ou plusieurs étages du volume.

De préférence lorsque la cellule comporte plusieurs étages, la totalité du volume délimité entre les compartiments avant, arrière et intermédiaire est occupé par une ou plusieurs extensions desdits compartiments avant, arrière et intermédiaire.

Les extensions par exemple d'un compartiment avant ou arrière dans le volume D, permettent l'interconnexion d'un appareillage situé dans un compartiment avant avec le jeu de barre situé dans le compartiment arrière. Une extension du compartiment intermédiaire permet une connexion des connecteurs d'un appareillage situé au niveau d'un étage sur une partie verticale par exemple droite avec les connecteurs situés à gauche d'un appreillage situé dans un étage différent par l'intermédiaire de ladite extension du compartiment intermédiaire et d'un câblage interne au compartiment intermédiaire.

Dans le mode préféré de réalisation les appareillages de commutation électrique sont entièrement débrochables. On veut dire par là que les appareillages de commutation électrique peuvent être mis dans un positionnement de sectionnement tout en restant mécaniquement supporté par le compartiment.

Avantageusement, il est prévu plusieurs compartiments avant disposés verticalement.

Dans un mode de réalisation le compartiment arrière est commun à la cellule.

Dans un mode de réalisation le compartiment intermédiaire est commun à la cellule.

Il y a ainsi selon l'invention deux types de compartiment, des compartiments avec extension ayant une extension qui occupent une partie au moins dudit volume D entre le(s) compartiment(s) arrière les compartiment(s) avant et intermédiaire, et des compartiments ne comportant pas d'extension dit sans extension.

Une extension par exemple d'un compartiment avant s'étend dans le volume D jusqu'à atteindre le compartiment arrière.

Préférentiellement, les compartiments avec extension logent au moins partiellement un dispositif de protection électrique.

Il va être parlé ci après de connecteurs d'entrée et de connecteurs de sortie ou de traversées de cloison d'entrée ou de sortie. Ces connecteurs ou traversées de cloison ne se distinguent pas les uns des autres par leurs caractéristiques physiques. Le mot connecteur désigne ici une partie mâle ou femelle d'un ensemble de connexion comprenant lui les parties mâle et femelle. Un connecteur ou une traversée de cloison est dit d'entrée ou de sortie selon sa proximité électrique avec les barres d'alimentation. Ainsi dans un compartiment les connecteurs ou traversées de cloison d'entrée sont couplés aux barres d'alimentation au travers de moins d'appareillages que les connecteurs ou traversées de cloison de sortie de ce compartiment.

Les appareillages situés dans les compartiments avant comportent des connecteurs d'entrée et de sortie embrochable avec des traversées de cloison d'entrée et de sortie respectivement situées au niveau de la face opposée à la face avant. De préférence les traversées de cloison d'entrée et les traversées de cloison de sortie de chacun des compartiments avant sont disposés respectivement de part et d'autre d'un plan vertical fictif perpendiculaire à ladite face opposée à la face avant. Une traversées de cloison de sortie de compartiment avant est toujours prévu pour déboucher au niveau d'une face avant d'un compartiment intermédiaire. Une traversées de cloison d'entrée de compartiment avant débouche au niveau d'une face avant soit d'un compartiment intermédiaire soit d'un compartiment arrière.

Les traversées de cloison d'entrée des compartiments avant avec extension débouchent au niveau du compartiment arrière et les connecteurs de sortie débouchent au niveau une cloison du compartiment intermédiaire.

Les connecteurs d'entrée ainsi que les connecteurs de sortie des compartiments avant sans extension débouchent au niveau d'une cloison du compartiment intermédiaire.

On peut également prévoir que le compartiment arrière comporte une extension qui s'étend dans ledit volume D jusqu'à atteindre un compartiment avant. Ledit compartiment avant est alors sans extension et possède une traversées de cloison d'entrée débouchant sur une cloison du compartiment arrière et une traversées de cloison de sortie qui débouche au niveau d'une cloison du compartiment intermédiaire.

### BRÈVE DESCRIPTION DES DESSINS.

Les différents objets et caractéristiques de l'invention apparaîtront plus clairement dans la description qui va suivre et dans les figures annexées qui représentent:
- les figures 1 et 2, des dispositions de l'art antérieur décrits précédemment
- la figure 3A, un exemple de réalisation d'une cellule de commutation d'appareils électriques moyenne tension selon l'invention,
- les figures 3B à 3E, différentes vues de la cellule de la figure 3A,
- les figures 4A et 4B, deux types de cellules de commutateurs selon l'invention,
- les figures 5A et 5B, un étage de type E1 d'une cellule selon l'invention,
- les figures 6A et 6B, un étage de type E2 d'une cellule selon l'invention,
- les figures 7A et 7B, un étage de type E3 d'une cellule selon l'invention,
- la figure 8, une vue générale d'une cellule selon l'invention,
- la figure 9A, un circuit de démarrage de moteur en deux temps de démarrage et avec inversion du sens de rotation,
- la figure 9B, un circuit de démarrage de moteur par autotransformateur,
- les figures 10A à 10D, des vues détaillées d'une cellule comportant des étages de types différents,
- les figures 11A et 11B, une cellule selon l'invention équipée d'un compartiment basse tension.

### EXPOSÉ DÉTAILLÉ DE MODES DE RÉALISATION PARTICULIERS.

Dans les utilisations classiques moyenne tension, l'appareillage de commutation assure des fonctions de commande, de liaison et de protection entre un circuit d'alimentation commun à différentes cellules (un jeu de barres d'alimentation) et des circuits de liaison (câbles) reliés à des appareils électriques à commander et à alimenter.

On va donc décrire un exemple de réalisation du système de l'invention.

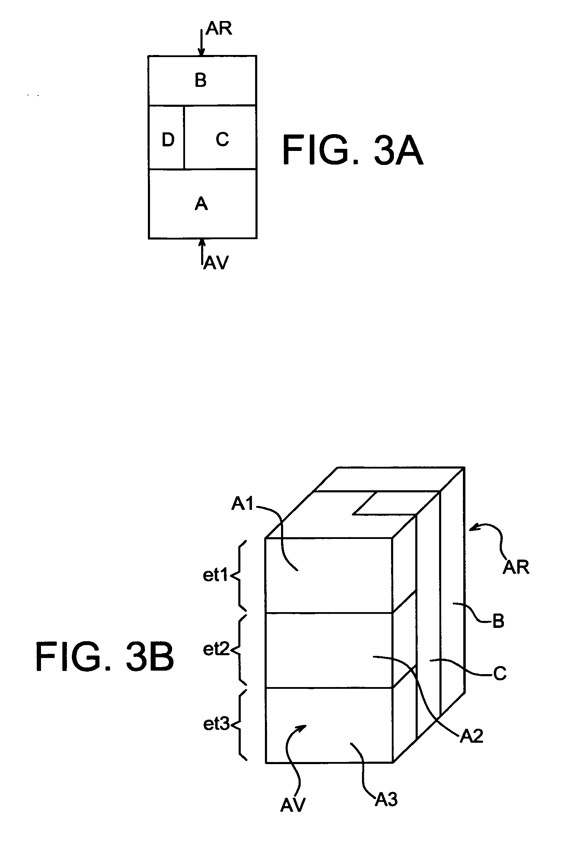

Tout d'abord, l'invention concerne un agencement d'une cellule telle que représentée en vue de dessus par la figure 3A. Une cellule comporte une face avant AV accessible à un opérateur et une face arrière AR qui peut ne pas être accessible et qui peut, par exemple être adossée, voire fixée à une paroi. Dans cette cellule, on a prévu de placer, dans la région arrière qui affleure la face arrière AR, un compartiment arrière B de passage de barres moyenne tension BMT de distribution de l'énergie électrique moyenne tension. Dans la partie avant, qui affleure la face avant AV, sont prévus des compartiments avant tel que A comportant l'appareillage de protection et de commutation ou commutateurs. Les entrées d'un commutateur sont destinées à être connectées aux barres de distribution BMT et les sorties sont destinées à être connectées à un appareil à commander et qui doit être alimenté en énergie électrique.

Dans la partie intermédiaire, entre les compartiments avant A et arrière B sont prévus un compartiment intermédiaire C permettant le passage de câbles permettant de connecter les sorties de l'appareillage du compartiment avant A, à l'appareil à commander. Dans cette partie intermédiaire, il est également prévu un volume ou espace D qui peut contenir des extensions de l'un ou de plusieurs des compartiments avant A, arrière B ou intermédiaire C.

Dans cet agencement, le compartiment avant A présente la particularité de permettre l'embrochage ou le débrochage de l'appareillage de commutation quelle que soit sa fonction et donc quelle que soit sa conception comme on le verra ci-après.

De façon générale une cellule comprendra plusieurs étages, par exemple trois étages, comme cela est représenté en figure 3B. Un étage est défini comme une tranche horizontale de la cellule, cette tranche correspondant à la hauteur d'un compartiment situé dans cette tranche. Il peut s'agir d'un compartiment avant, arrière ou intermédiaire. Dans les exemples qui sont commentés ci-après, les compartiments arrière B et intermédiaire C sont communs à tous les étages et seuls les compartiments avant contribuent à la définition des étages. Lorsqu'il y a plusieurs étages, le volume D est fictivement divisé en autant de volumes que d'étages, un volume D1 étant une tranche horizontale du volume D correspondant au premier étage et ainsi de suite jusqu'à un volume Dn si la cellule comporte un nombre n d'étages.

Chaque étage et1, et2, et3 représenté figure 3B, comporte respectivement un premier compartiment avant A1, un deuxième compartiment avant A2, un troisième compartiment avant A3.

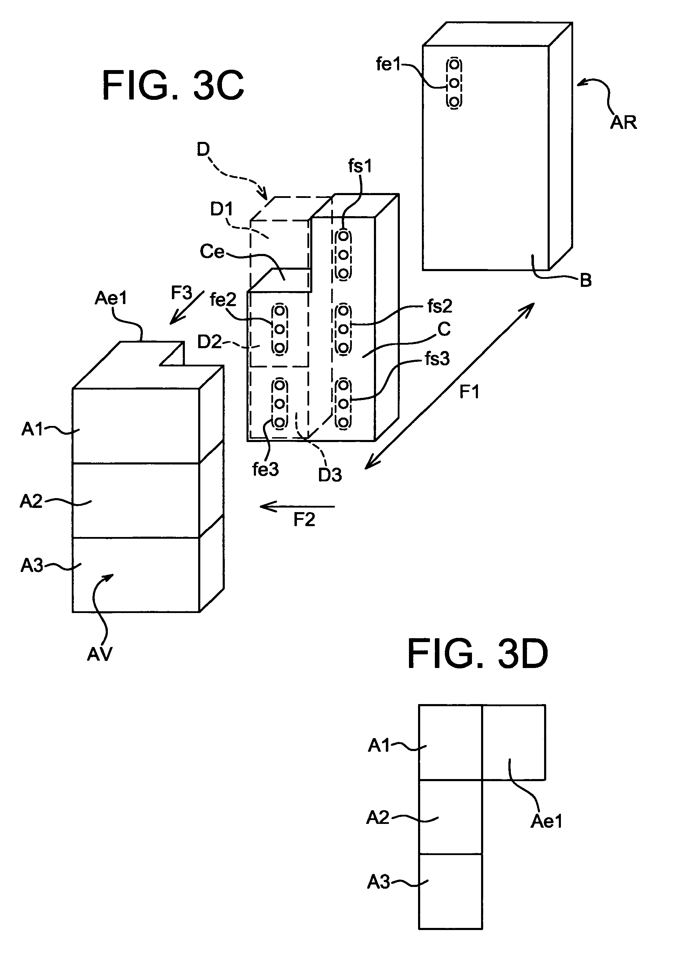

La figure 3C représente une vue éclatée par déplacement des compartiments selon une direction F1 perpendiculaire aux faces avant AV et arrière AR. Sur cette figure, il apparaît que le volume D, représenté en pointillés et qui est situé entre les compartiments avant A1-A3 et arrière B, contient des extensions de compartiments avant Al- A3 telles qu'une extension Ae1 du compartiment avant A1 occupant le volume D1, et telle qu'une extension Ce du compartiment intermédiaire C occupant les volumes D2 et D3.

La figure 3D représente une vue selon une direction F2 perpendiculaire à la direction F1 des compartiments avant A1 à A3 où l'on voit que le compartiment avant A1 comporte une extension Ae1 que ne possèdent pas les compartiments avant A3 et A2. Ainsi l'invention prévoit d'avoir deux types de compartiments avant:
- des compartiments avec extension tel que le compartiment avant A1 qui comporte une extension Ae1,
- des compartiments sans extension, tels que les compartiments avant A3 et A2, ne comportant pas d'extension.

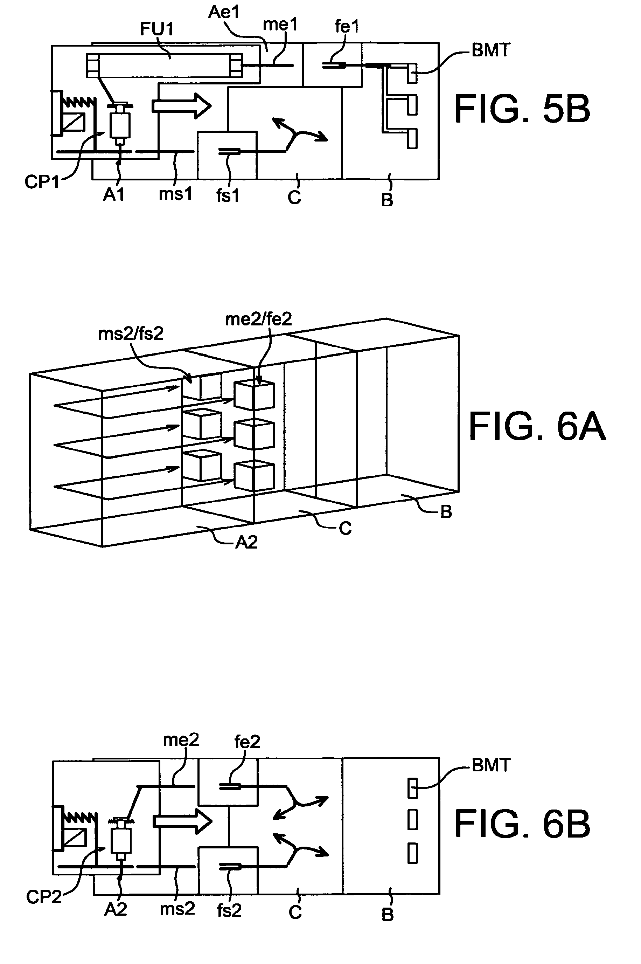

L'extension Ae1 du compartiment avant A1 est située dans le volume D1 du volume D. Cela permet à un connecteur me1 représenté figure 5B situé sur l'appareillage placé dans dans l'extension Ael, de s'embrocher avec une traversée de cloison fe1 débouchant dans le compartiment arrière B comme cela va être expliqué plus en détail ci-après.

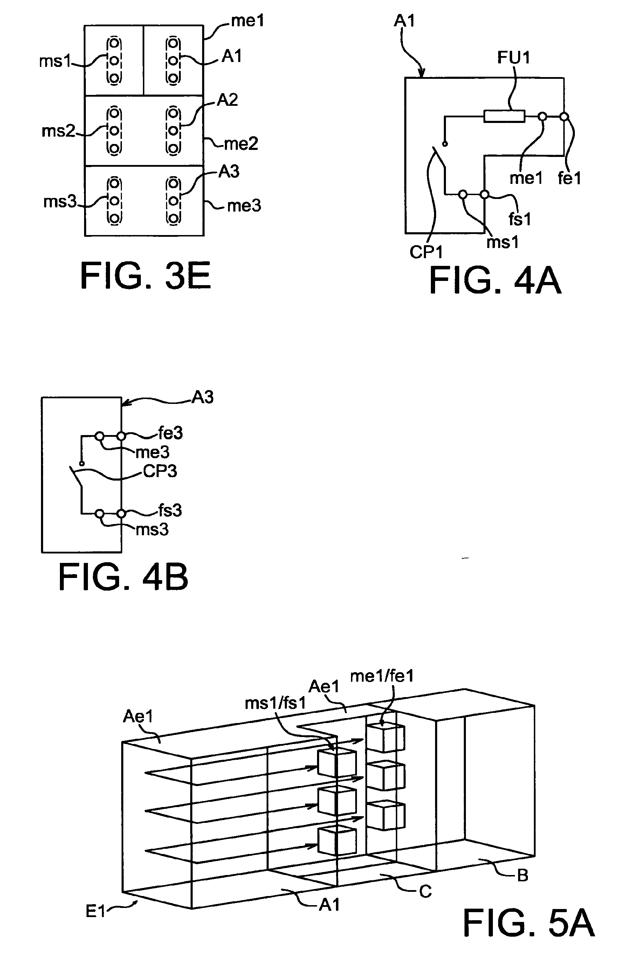

La figure 3E représente les compartiments avant A1 à A3 vus de l'arrière selon la flèche F3 représentée figure 3C. On voit les parois communes aux compartiments avant A1 à A3 et au compartiment intermédiaire C ainsi que la paroi commune à l'extension Ae1 et au compartiment arrière B. On voit donc, sur la figure 3E, des traversées de cloison fe2-fe3 et fs1 à fs3 destinés à connecter les appareillages situés dans les compartiments avant A1 à A3 au compartiment intermédiaire C et la traversée de cloison fe1 destiné à connecter la partie de l'appareillage située au niveau de l'extension Ae1 du compartiment avant A1 au compartiment arrière B. A titre d'exemple, ces connecteurs ou traversées de cloison sont des connecteurs ou traversées de cloison triphasés. Les traversées de cloison fe1 à fe3 sont des traversées de cloison raccordées à des connecteurs d'entrée et les traversées de cloison fs1 à fs3 sont des traversées de cloison raccordées à des connecteurs de sortie. Ces connecteurs fs1 à fs3 sont par exemple des connecteurs femelles.

Sur la figure 3C, on voit sur les compartiments arrière B et intermédiaire C, ces traversées de cloison fe1 à fe3 et fs1 à fs3. Des connecteurs mâles me1 à me3 et ms1 à ms3 situés sur les appareillages débrochables sont destinés à s'embrocher dans les traversées de cloison respectivement fe1 à fe3 et fs1 à fs3. Ces connecteurs sont représentés figures 5A à 7B.

Les compartiments avant A1 à A3 comportent chacun des appareillages de commutation débrochables. La figure 4A représente de façon schématique en vue de dessus, un compartiment avec extension (le compartiment A1). Le connecteur ms1 est ainsi connectable au connecteur me1 par l'intermédiaire d'un dispositif de protection FU1 et par l'intermédiaire d'un appareillage de commutation CP1. Bien entendu, si le système est triphasé, l'appareillage de commutation est triphasé et en principe, on a un dispositif de protection par phase. Le dispositif de protection est de préférence un fusible. En se reportant aux figures 3B à 3E, on voit donc que, lorsque les connecteurs me1 et ms1 sont embrochés avec les traversées de cloison fe1 et fs1 respectivement, l'appareillage de commutation CP1 permet de connecter la traversées de cloison fe1 débouchant dans le compartiment arrière B à la traversées de cloison fs1 débouchant dans le compartiment intermédiaire C.

Dans un montage électrique, un compartiment avant avec extension contiendra en principe un appareillage de commutation principal dont les bornes d'entrée seront couplées aux barres de distribution moyenne tension. Les bornes de sortie seront couplées à un élément extérieur (un circuit électrique à commander) ou à un appareillage de commutation secondaire.

La figure 4B représente de façon schématique en vue de dessus, un compartiment sans extension tel que le compartiment avant A3. Le connecteur me3 est ainsi connectable au connecteur ms3 par l'appareillage de commutation CP3. De ce fait, lorsque les connecteurs me3 et ms3 sont embrochés avec les traversées de cloison fe3 et fs3 respectivement, l'appareillage de commutation CP3 permet de connecter la traversée de cloison fe3 débouchant dans l'extension D3 du compartiment intermédiaire C à la traversée de cloison fs3 débouchant dans le compartiment intermédiaire C.

Dans un montage électrique, un compartiment avant sans extension contiendra, en principe, un appareillage de commutation secondaire dont les bornes d'entrée seront couplées à un appareillage de commutation principal ou à un élément extérieur. Les bornes de sortie seront couplées à un élément extérieur ou à un autre appareillage de commutation secondaire. Dans le cas d'un appareillage de commutation secondaire, les embrochages d'entrée sur cet appareillage secondaire sont donc décalés vers l'avant pour permettre la connexion à partir de l'appareillage primaire et non plus à partir des barres de distribution d'électricité moyenne tension. Cela permet d'avoir dans un même volume les bornes d'entrée et de sortie d'un appareillage de commutation secondaire et les bornes de sortie d'un appareillage de commutation principal située au-dessus ou au-dessous.

Le compartiment intermédiaire C contient des traversées de cloison fs1 à fs3, fe2 et fe3 ainsi que des câbles permettant de connecter ces traversées de cloison soit à un appareil électrique à commander (tel qu'un moteur électrique) soit de connecter ces traversées de cloison entre elles comme cela sera expliqué ci-après.

L'invention prévoit différents types d'étages.

Les figures 5A et 5B représentent un étage dit de type E1 qui comporte un compartiment avant avec extension tel que le compartiment A1 représenté figure 3C. Sur la figure 5A, les connecteurs ou traversées de cloison d'une part me1 et fe1 et d'autre part ms1 et fs1 sont représentés embrochés sous forme d'un cube unique pour chaque ensemble de connecteurs ou traversées de cloison embrochés l'un avec l'autre. Sur la figure 5B, l'appareillage du compartiment A1 est représenté débroché des traversées de cloison fe1 et fs1. On retrouve sur cette figure, un fusible FU1 logé partiellement dans l'extension Ae1 du compartiment A1 et un appareillage de commutation CP1.

Dans les étages de type E1 la partie de volume D correspondant audit étage E1 est occupée par une extension d'un compartiment avant.

Les figures 6A et 6B représentent un étage dit de type E2 comportant un compartiment sans extension tel que le compartiment avant A2 de la figure 3C. Sur la figure 6A les connecteurs ms2, me2 du compartiment avant A2 sont représentés embrochés avec les traversées de cloison fs2, fe2 respectivement du compartiment intermédiaire C. Sur la figure 6B, les compartiments avant A2 et intermédiaire C sont représentés avec leurs connecteurs ms2, me2 débrochés. La forme de représentation de cet étage est la même que celle des étages des figures 5A et 5B.

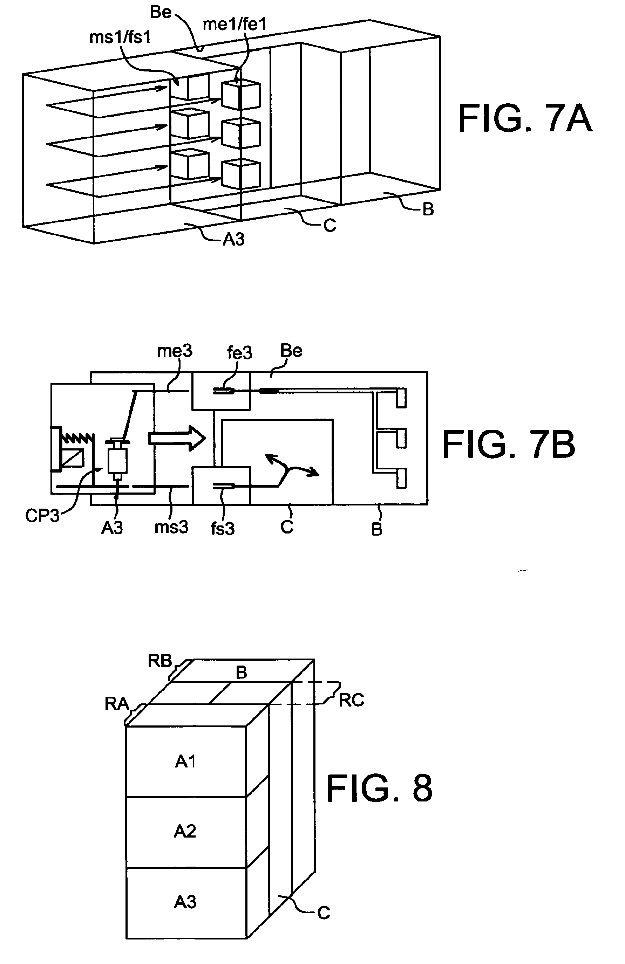

Les figures 7A et 7B représentent un étage de type E3 comportant un compartiment arrière B possédant une extension Be qui se prolonge dans le volume D vers le compartiment avant A3.

Il est ainsi possible de créer une cellule combinée de différents types d'étages.

Sur la figure 8, on a représenté une cellule divisée en trois régions principales RA, RB et RC. La région avant RA est commune aux compartiments avant A3 à A1 contenant les appareils de commutation (contacteurs). Cette région peut être cloisonnée si les appareils sont distincts et on a alors des compartiments distinct A1, A2, A3 comme représenté figure 8. Elle peut être non cloisonnée ou partiellement cloisonnée dans le cas d'un appareillage occupant deux étages ou plus de la région RA.

La région arrière RB est commune aux différents étages. Elle peut être non cloisonnée ou cloisonnée en prévoyant des traversées des barres verticales à travers les différents étages afin d'assurer la continuité du jeu de barres dans la région arrière RB. Dans le cas où il n'est pas nécessaire de poursuivre le jeu de barres pour certains étages, on peut arrêter ce jeu de barres et cloisonner le volume contenant le jeu de barres.

La région intermédiaire RC est commune aux différents étages et contient le compartiment intermédiaire C prévu pour les câbles d'interconnexion entre les appareillages de commutation de la région RA et la connexion à l'appareil (ou aux appareils) à commander. Cette région RC peut n'être pas cloisonnée afin de permettre les connexions aux différents étages.

On va maintenant décrire une application de la cellule ainsi décrite à un exemple de cellule prévu pour un démarrage d'un moteur électrique comprenant un inverseur et un élément de réduction de tension. Dans cet exemple, l'élément de réduction de tension a été placé à l'extérieur de la cellule

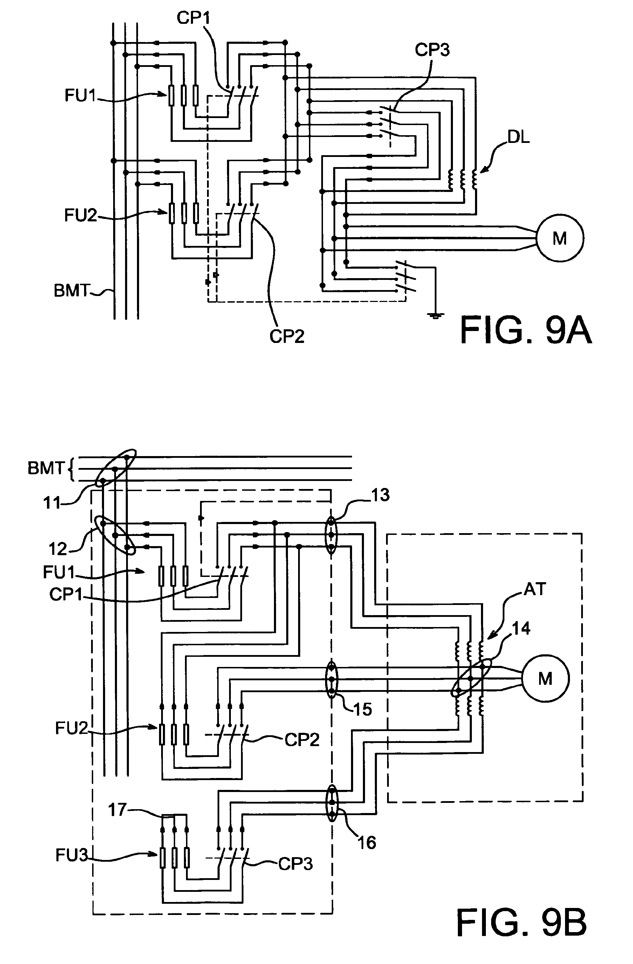

La figure 9A représente le schéma de principe de démarrage d'un moteur électrique M.

On trouve:
- les barres verticales BMT d'alimentation électrique,
- un premier commutateur CP1 qui est en série avec des fusibles tel que FU1 et qui permettra le démarrage du moteur M dans un premier sens de rotation,
- un deuxième commutateur CP2 qui est en série avec un fusible FU2 et qui permettra le démarrage du moteur M dans un deuxième sens de rotation inverse du premier,
- un troisième commutateur CP3 qui permettra de shunter un dispositif de limitation de courant DL après la phase de démarrage du moteur M.

Le fonctionnement d'un tel circuit est connu dans la technique et n'a pas besoin d'être décrit plus avant.

la figure 9B représente un circuit de démarrage d'un moteur M par autotransformateur AT. Dans ce circuit, l'appareillage de commutation principal CP1 est relié aux barres d'alimentation électrique moyenne tension BMT par une connexion 12 d'une part et au primaire d'un autotransformateur AT par une connexion 13 d'autre part. Le moteur M est connecté à la prise de sortie 14 de l'autotransformateur AT.

Un appareillage de commutation shunt CP2 est connecté à la sortie 13 de l'appareillage de commutation principal CP1 d'une part et à la prise de sortie 14 de l'autotransformateur d'autre part. Quand l'appareillage de commutation CP2 est fermé, la prise de sortie 14 de l'autotransformateur AT est à la tension maximale. Il n'y a pas de réduction de tension aux bornes du moteur M.

Un autre appareillage de commutation shunt CP3 est relié aux bornes de sortie 16 du primaire de l'autotransformateur AT pour créer un point étoile 17.

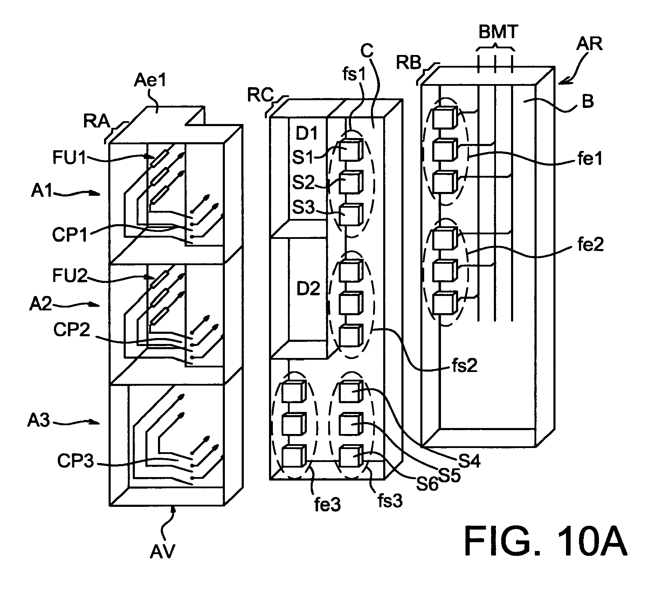

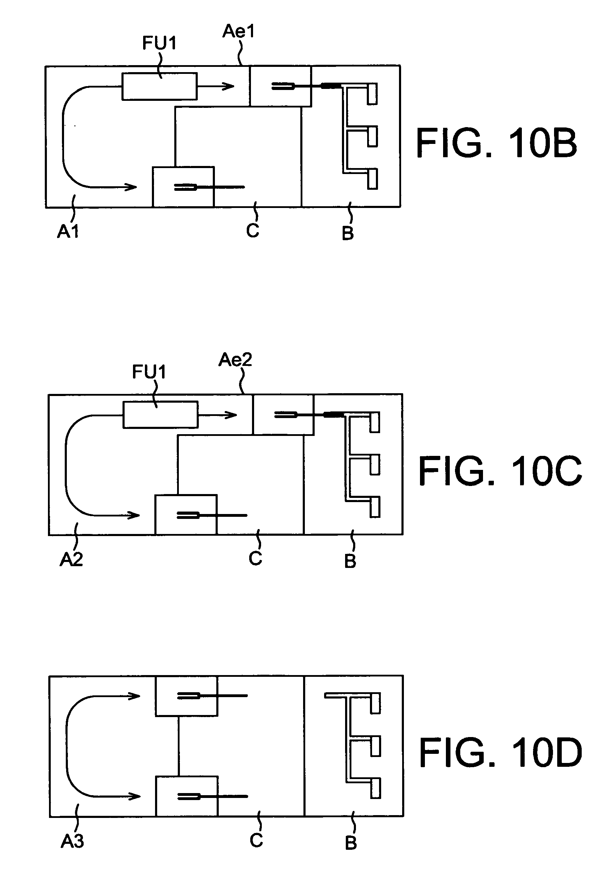

La figure 10A représente, à titre d'exemple, une cellule contenant les divers organes du circuit de la figure 9A. Pour mieux voir le contenu des compartiments de la cellule, les région RA, RB et RC ont été décalées les unes par rapport aux autres selon un plan parallèle au plan de la face avant de la cellule.

Le compartiment avant A1 contient le commutateur CP1 et les fusibles tel que FU1. Ce compartiment comporte une extension Ae1 permettant de contenir au moins partiellement le fusible FU1.

Le compartiment avant A2 contient le commutateur CP2 et au moins partiellement les fusibles tel que FU2. Il comporte une extension non visible sur la figure 10A.

Le compartiment avant A3 contient le commutateur CP3.

De plus les divers compartiments avant A1 à A3 comportent des connecteurs ou traversées de cloison non visibles sur la figure (connecteurs me1 à me3 et traversées de cloison ms1 à ms3 des figures 3B à 3E) et permettant de connecter les fusibles et les entrées et sorties de commutateurs aux compartiments arrière B et intermédiaire C.

Le compartiment arrière B contient les barres BMT d'alimentation électrique et des traversées de cloison fe1 et fe2 connectés à ces barres d'alimentation.

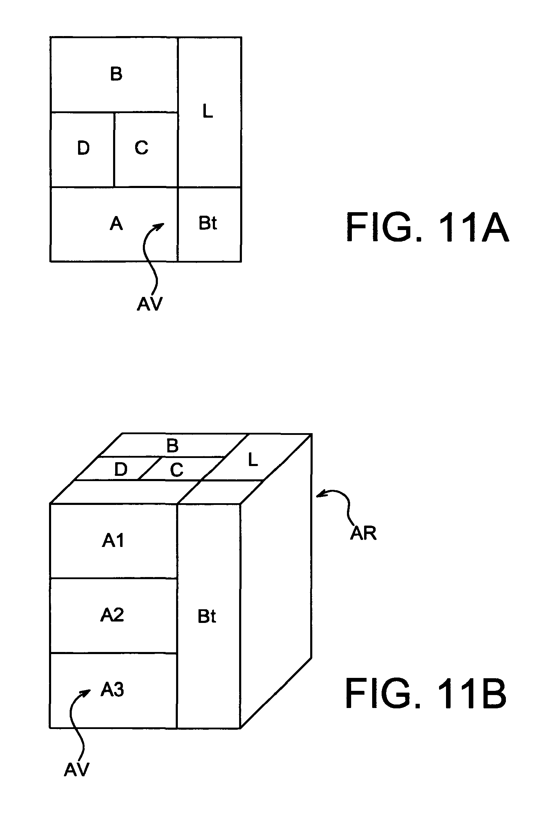

Le compartiment intermédiaire C contient des traversées de cloison fs1 à fs3 ainsi qu'une extension contenant une traversée de cloison fe3. De plus, ce compartiment contient un câblage non représenté permettant de réaliser le schéma de la figure 9A et de connecter la cellule au dispositif limiteur de courant DL et au moteur M (voir figure 11B)

Lorsque les compartiments avant A1 à A3 sont placés sur le compartiment intermédiaire C, lui-même placé sur le compartiment arrière B:
- des extensions des compartiments A1 et A2 sont placées dans les volumes D1 et D2,
- les connecteurs me1 et me2 (non visibles sur la figure) des appareillages situés dans les compartiments avant A1 et A2 sont embrochés avec les traversées de cloison fe1 et fe2 du compartiment arrière B ; ces traversées de cloison fe1 et fe2 connectent ainsi les entrées des appareillages de commutation CP1 et CP2 aux barres d'alimentation BMT du compartiment arrière B,
- le connecteur me3 de l'appareillage situé dans le compartiment avant A3 est embroché dans la traversée de cloison fe3 débouchant dans une extension du compartiment intermédiaire C logée dans le volume D3.
- les connecteurs ms1 à ms3 des appareillages situés dans les compartiments avant sont embrochés avec les traversées de cloison fs1 à fs3 du compartiment intermédiaire respectivement.

Sur la figure 10A, les sorties S1 à S3 correspondent aux connexions des sorties représentées sur le schéma de la figure 9A des appareillages de commutation CP1 et CP2 vers l'élément de réduction de tension DL . Les sorties S4 à S6 correspondent à la connexion de la sortie de l'appareillage de commutation CP3 vers le moteur M.

Pour une meilleure compréhension de la figure 10A, les figures 10B à 10D représentent en coupe les trois étages de la cellule. Sur les figures 10B et 10C, il apparaît que les compartiments avant A1 et A2 comportent des extensions Ae1 et Ae2 respectivement permettant de contenir au moins partiellement des fusibles FU1 et FU2. Le compartiment avant A3 ne comporte pas d'extension.

La commande électrique des appareillages de commutation situés dans les compartiments avant A1 à A3 et leur contrôle, nécessitent une alimentation basse tension. Il est donc prévu un compartiment basse tension Bt accolé de préférence sur le côté des compartiments avant A1 à A3 comme cela est représenté sur les figures 11A et 11B. Un compartiment L peut également être prévu derrière le compartiment basse tension Bt pour le passage de liaisons câblées. Le raccordement de ces liaisons peut se faire par l'arrière du compartiment L ou bien par l'avant, après extraction d'une partie du compartiment basse tension Bt situé devant.

La figure 11B représente de manière générale la cellule ainsi constituée avec le compartiment basse tension Bt situé à côté des compartiments avant A1 à A3.

Dans la description qui précède on a prévu que des connecteurs mâles des appareillages, tels que me1-me3, s'embrochaient sur des traversées de cloison femelles des compartiments avant A1 à A3. Il est bien entendu que cela pourrait être l'inverse sans sortir du cadre de l'invention.

Un tel système permet de réaliser en usine le câblage interne de la cellule pour répondre à un schéma demandé par un client. Le câblage interne est réalisé dans le compartiment intermédiaire C. Ce système ne nécessite donc aucune opération de câblage sur le site à l'exception éventuellement des câblages nécessaires au raccordement des appareil extérieurs, par exemple moteur ou dispositif de limitation de tension. Les opérations de maintenance sur les appareillages de commutation ne nécessitent pas non plus d'opération de décâblage/câblage puisqu'il suffit de débrocher et d'embrocher les connecteurs des compartiments avant A1 à A3.

## Revendications

1. Système de commande d'appareils électriques comprenant une cellule comportant des barres (BMT) de distribution d'énergie électrique moyenne tension, des appareillages de commutation électriques (CP1-CP3), des câbles électriques (Ca) de liaison vers des appareils (M) électriques à commander, ladite cellule comprenant une face avant (AV) accessible par un utilisateur et une face arrière (AR) opposée à la face avant (AV), **caractérisé en ce que** ladite cellule comporte:
- au moins un compartiment arrière (B) situé dans une région arrière (RB) de la cellule affleurant la face arrière (AR) et permettant le passage des barres (BMT) de distribution de l'énergie électrique moyenne tension,
- un ou plusieurs compartiment(s) avant (A, A1-A3) situé(s) dans une région avant (RA) de la cellule affleurant la face avant (AV) et empilés verticalement lorsque la cellule comporte plusieurs compartiments avant, chaque compartiment avant définissant dans ce cas un étage (et1, et2, et3) de la cellule, le(s) compartiment(s) avant comportant un ou plusieurs appareillages de commutation (CP1 à CP3) de commande d'au moins un appareil (M) électrique à commander,
- un ou plusieurs compartiment(s) intermédiaire(s) (C) situé(s) entre le (s) compartiment(s) arrière (B) et le(s) compartiment(s) avant (A, A1-A3) et permettant le passage de câbles électriques de liaison permettant de relier les appareillages de commutation de commande (CP1 à CP3) audit appareil (M) électrique à commander,
- un volume (D) également situé entre le (s) compartiment(s) arrière (B) et le(s) compartiment(s) avant (A, A1-A3), à côté du ou des compartiment(s) intermédiaire(s) (C), et logeant une ou plusieurs extension(s) (Ae, Be, Ce) de compartiment(s) avant, arrière ou intermédiaire (A, A1-A3, B, C),
- Des traversées de cloison (fs1-fs3, fe1-fe3), situées dans le(s) compartiment(s) avant(s) (A, A1-A3) ou dans une de leurs extension(s) (Ae1) et débouchant dans le compartiment arrière (B) ou intermédiaire (C) ou dans une de leur(s) extension(s) (Be, Ce), permettant de connecter un appareillage débrochable (CP1-CP3) d'un compartiment avant avec le jeu de barre (BMT) situé dans le compartiment arrière et/ou les cables de liaison situés dans le compartiment intermédiaire (C).

2. Système de commande d'appareils électriques selon la revendication 1, **caractérisé en ce que** lorsque la cellule comporte plusieurs étages (et1, et2, et3) la totalité du volume (D) délimité entre les compartiments avant, arrière et intermédiaire (A, A1-A3, B, C) est occupé par une ou plusieurs extensions (Ae, Be, Ce) desdits compartiments avant, arrière et intermédiaire (A, A1-A3, B, C).

3. Système de commande d'appareils électriques selon l'une des revendications 1 ou 2, **caractérisé en ce que** chacun des appareilages de commutation (CP1 à CP3) est entièrement débrochable.

4. Système de commande d'appareils électriques selon l'une des revendications 1 à 3, **caractérisé en ce qu'**il comporte plusieurs compartiments avant (A3, A2, A1) disposés verticalement.

5. Système de commande d'appareils électriques selon l'une des revendications 1 à 4, **caractérisé en ce que** le compartiment arrière (B) est commun à la cellule.

6. Système de commande d'appareils électriques selon l'une des revendications 1 à 5, **caractérisé en ce que** le compartiment intermédiaire (C) est commun à la cellule.

7. Système de commande d'appareils électriques selon l'une des revendications 4 à 6, **caractérisé en ce qu'**il comporte parmi les compartiments avant (A3, A2, A1) un ou plusieurs compartiment(s) (A1, A2) avec extension (Ae1, Ae2) et un ou plusieurs compartiment(s) (A2, A3) sans extension, le(s) compartiment(s) (A1, A2) avec extension (Ae1, Ae2) comportant une extension (Ae1, Ae2) qui s'étend dans ledit volume (D) jusqu'à atteindre le compartiment arrière (B), et le(s) compartiment(s) sans extension (A2, A3) ne comportant pas d'extension.

8. Système de commande d'appareils électriques selon la revendication 7, **caractérisé en ce que** les compartiments (A1, A2) avec extension (Ae1, Ae2) logent au moins partiellement un dispositif de protection électrique (FU1, FU2).

9. Système de commande d'appareils électriques selon la revendication 6, **caractérisé en ce que** les appareillages (CP1-CP3) situés dans les compartiments avant (A1 à A3) comportent des connecteurs d'entrée (me1-me3) et de sortie (ms1-ms3) embrochables dans des traversées de cloison d'entrée (fe1-fe3) et de sortie, fs1-fs3) respectivement situées au niveau de la face opposée à la face avant (AV), les traversées de cloison (fe1-fe3) d'entrée et les traversées de cloison (fs1-fs3) de sortie étant disposées respectivement de part et d'autre d'un plan vertical et débouchant dans les compartiments arrière (B) et intermédiaire (C).

10. Système de commande d'appareils électriques selon la revendication 9, **caractérisé en ce que** les connecteurs d'entrée (me1) des appareillages situés dans les compartiments avant (A1, A2) avec extension (Ae1, Ae2) sont embrochables avec des traversées de cloison (fe1-fe3) d'entrée prévues dans les compartiments avants et débouchant dans le compartiment arrière (B) et **en ce que** les connecteurs de sortie (ms1) des dits appareillages sont embrochables avec des traversées de cloison (fs1-fs3) de sortie prévus dans les compartiments avants et débouchant dans le compartiment intermédiaire (C).

11. Système de commande d'appareils électriques selon la revendication 9, **caractérisé en ce que** les connecteurs d'entrée (me1) ainsi que les connecteurs de sortie (ms1) des appareillages situés dans les compartiments (A2, A3) sans extension sont embrochables avec des traversées de cloison (fe3, fs1-fs3) prévus dans les compartiments avants et débouchant dans le compartiment intermédiaire (C).

12. Système de commande d'appareils électriques selon la revendication 8, **caractérisé en ce que** le compartiment arrière (B) comporte une extension (Be) qui s'étend dans ledit volume (D) jusqu'à atteindre un compartiment avant (A, A1-A3), ledit compartiment avant (A, A1-A3) étant sans extension et recevant un appareillage possédant un connecteur d'entrée (me1) destiné à s'embrocher avec une traversée de cloison (fe1) d'entrée situé dans le compartiment avant et débouchant dans le compartiment arrière (B) et un connecteur de sortie destiné à s'embrocher avec une traversée de cloison (fs1) prévue dans le compartiment avant et débouchant dans le compartiment intermédiaire (C).

## Patentansprüche

1. System zur Steuerung elektrischer Geräte, umfassend eine Zelle mit Schienen (BMT) zur Verteilung elektrischer Mittelspannungsenergie, elektrische Schaltgeräte (CP1-CP3), elektrische Kabel (Ca) zur Verbindung mit zu steuernden elektrischen Geräten (M), wobei die Zelle eine vordere Seite (AV) umfasst, die durch einen Benutzer zugänglich ist, sowie eine hintere Seite (AR), die der vorderen Seite (AV) entgegengesetzt ist, **dadurch gekennzeichnet, dass** die Zelle umfasst:
- wenigstens ein hinteres Fach (B), das in einem hinteren Bereich (RB) der Zelle gelegen ist, welche mit der hinteren Seite (AR) abschließt und den Durchgang der Schienen (BMT) zur Verteilung der elektrischen Mittelspannungsenergie erlaubt,
- ein oder mehrere vordere(s) Fach/Fächer (A, A1-A3), das/die in einem vorderen Bereich (RA) der Zelle gelegen ist/sind, welche mit der vorderen Seite (AV) abschließt und die vertikal gestapelt sind, wenn die Zelle mehrere vordere Fächer umfasst, wobei jedes vordere Fach in diesem Fall eine Stufe (et1, et2, et3) der Zelle definiert, wobei das/die vordere(n) Fach/Fächer ein oder mehrere Schaltgeräte (CP1-CP3) zur Steuerung wenigstens eines zu steuernden elektrischen Geräts (M) umfasst/umfassen,
- ein oder mehrere Zwischenfach/-fächer (C), das/die zwischen dem/den hinteren Fach/Fächern (B) und dem/den vorderen Fach/Fächern (A, A1-A3) gelegen ist/sind und den Durchgang elektrischer Verbindungskabel erlaubt/erlauben, die die Verbindung der Steuerungsschaltgeräte (CP1-CP3) mit dem zu steuernden elektrischen Gerät (M) erlauben,
- ein Volumen (D), das ebenfalls zwischen dem/den hinteren Fach/Fächern (B) und dem/den vorderen Fach/Fächern (A, A1-A3) neben dem oder den Zwischenfach/-fächern (C) gelegen ist und eine oder mehrere Verlängerung(en) (Ae, Be, Ce) des/der vorderen, hinteren oder Zwischen-fach/fächern (A, A1-A3, B, C) aufnimmt,
- Wanddurchführungen (fs1-fs3, fe1-fe3), die in dem/den vorderen Fach/Fächern (A, A1-A3) oder in einer ihrer Verlängerung(en) (Ae1) gelegen sind und in das hintere Fach (B) oder in das Zwischenfach (C) oder in eine ihrer Verlängerungen (Be, Ce) münden, und die den Anschluss eines herausziehbaren Geräts (CP1-CP3) eines vorderen Fachs an den Schienensatz (BMT) erlauben, der in dem hinteren Fach gelegen ist, und/oder an die Verbindungskabel, die in dem Zwischenfach (C) gelegen sind.

2. System zur Steuerung elektrischer Geräte nach Anspruch 1, **dadurch gekennzeichnet, dass** dann, wenn die Zelle mehrere Stufen (et1, et2, et3) umfasst, das gesamte Volumen (D), das zwischen dem vorderen, dem hinteren und dem Zwischenfach (A, A1-A3, B, C) begrenzt ist, durch eine oder mehrere Verlängerungen (Ae, Be, Ce) des vorderen, des hinteren und des Zwischenfachs (A, A1-A3, B, C) besetzt ist.

3. System zur Steuerung elektrischer Geräte nach einem der Ansprüche 1 oder 2, **dadurch gekennzeichnet, dass** jedes der Schaltgeräte (CP1-CP3) vollständig herausziehbar ist.

4. System zur Steuerung elektrischer Geräte nach einem der Ansprüche 1 bis 3, **dadurch gekennzeichnet, dass** es mehrere vertikal angeordnete vordere Fächer (A3, A2, A1) umfasst.

5. System zur Steuerung elektrischer Geräte nach einem der Ansprüche 1 bis 4, **dadurch gekennzeichnet, dass** das hintere Fach (B) der Zelle gemein ist.

6. System zur Steuerung elektrischer Geräte nach einem der Ansprüche 1 bis 5, **dadurch gekennzeichnet, dass** das Zwischenfach (C) der Zelle gemein ist.

7. System zur Steuerung elektrischer Geräte nach einem der Ansprüche 4 bis 6, **dadurch gekennzeichnet, dass** es bei den vorderen Fächern (A3, A2, A1) ein oder mehrere Fach/Fächer (A1, A2) mit Verlängerung (Ae1, Ae2) sowie ein oder mehrere Fach/Fächer (A2, A3) ohne Verlängerung umfasst, wobei das/die Fach/Fächer (A1, A2) mit Verlängerung (Ae1, Ae2) eine Verlängerung (Ae1, Ae2) umfasst/umfassen, die sich in das Volumen (D) hineinerstreckt, bis sie das hintere Fach (B) erreicht, und wobei das/die Fach/Fächer ohne Verlängerung (A2, A3) keine Verlängerung umfasst/umfassen.

8. System zur Steuerung elektrischer Geräte nach Anspruch 7, **dadurch gekennzeichnet, dass** die Fächer (A1, A2) mit Verlängerung (Ae1, Ae2) wenigstens teilweise eine elektrische Schutzvorrichtung (FU1, FU2) aufnehmen.

9. System zur Steuerung elektrischer Geräte nach Anspruch 6, **dadurch gekennzeichnet, dass** die Geräte (CP1-CP3), die in den vorderen Fächern (A1-A3) gelegen sind, Eingangsverbinder (me1-me3) und Ausgangsverbinder (ms1-ms3) umfassen, die in Eingangswanddurchführungen (fe1-fe3) beziehungsweise Ausgangswanddurchführungen (fs1-fs3) einschiebbar sind, die im Bereich der der Vorderseite (AV) entgegengesetzten Seite gelegen sind, wobei die Eingangswanddurchführungen (fe1-fe3) und die Ausgangswanddurchführungen (fs1-fs3) jeweils auf beiden Seiten einer vertikalen Ebene angeordnet sind und in das hintere Fach (B) und das Zwischenfach (C) münden.

10. System zur Steuerung elektrischer Geräte nach Anspruch 9, **dadurch gekennzeichnet, dass** die Eingangsverbinder (me1) der Geräte, die in den vorderen Fächern (A1, A2) mit Verlängerung (Ae1, Ae2) gelegen sind, in Eingangswanddurchführungen (fe1-fe3) einschiebbar sind, die in den vorderen Fächern vorgesehen sind und in das hintere Fach (B) münden, und dass die Ausgangsverbinder (ms1) der Geräte in Ausgangswanddurchführungen (fs1-fs3) einschiebbar sind, die in den vorderen Fächern vorgesehen sind und in das Zwischenfach (C) münden.

11. System zur Steuerung elektrischer Geräte nach Anspruch 9, **dadurch gekennzeichnet, dass** die Eingangsverbinder (me1) sowie die Ausgangsverbinder (ms1) der Geräte, die in den Fächern (A2, A3) ohne Verlängerung gelegen sind, in Wanddurchführungen (fe3, fs1-fs3) einschiebbar sind, die in den vorderen Fächern vorgesehen sind und in das Zwischenfach (C) münden.

12. System zur Steuerung elektrischer Geräte nach Anspruch 8, **dadurch gekennzeichnet, dass** das hintere Fach (B) eine Verlängerung (Be) umfasst, die sich in das Volumen (D) hineinerstreckt, bis sie ein vorderes Fach (A, A1-A3) erreicht, wobei das vordere Fach (A, A1-A3) ohne Verlängerung ist und ein Gerät empfängt, welches einen Eingangsverbinder (me1) besitzt, der dazu ausgelegt ist, in eine Eingangswanddurchführung (fe1) eingeschoben zu werden, welche in dem vorderen Fach gelegen ist und in das hintere Fach (B) mündet, sowie einen Ausgangsverbinder, der dazu ausgelegt ist, in eine Wanddurchführung (fs1) eingeschoben zu werden, welche in dem vorderen Fach vorgesehen ist und in das Zwischenfach (C) mündet.

## Claims

1. Control system for electrical equipment including a cubicle comprising medium voltage electricity distribution bars (BMT), electrical switchgear (CP1-CP3), electrical connecting cables (Ca) to the electrical equipment (M) to be controlled, the said cubicle comprising a front face (AV) that is accessible to a user and a back face (AR) opposite the front face (AV), **characterized in that** the said cubicle comprises:
- at least one rear compartment (B) located in a rear region (RB) of the cubicle flush with the back face (AR) and through which medium voltage electricity distribution bars (BMT) can pass,
- one or several front compartment(s) (A, A1-A3) located in a front region (RA) of the cubicle flush with the front face (AV) and stacked vertically when the cubicle comprises several front compartments, in this case each compartment defining a stage (et1, et2, et3) of the cubicle, the front compartment(s) comprising one or several switching units (CP1 to CP3) controlling at least one electrical equipment item (M) to be controlled,
- one or several intermediate compartment(s) (C) located between the rear compartment(s) and the front compartment(s) (A, A1-A3) through which electrical connecting cables can pass to connect the electrical switching unit (CP1 to CP3) to said electrical equipment (M) to be controlled,
- a volume (D) also located between the rear compartment(s) and the front compartment(s), adjacent to the intermediate compartment(s) I(C) and housing one or several extension(s) (Ae, Be, Ce) of the front, rear or intermediate compartment(s) (A, A1-A3, B, C),
- partition crossings (fs1-fs3, fe1-fe3), located in the front compartment(s) (A, A1-A3) or in one of the extension(s) (Ae1) of the front compartment(s) and opening up into the rear or intermediate compartment (C) or into one of their extension(s) (Be, Ce), so as to connect a withdrawable switching unit (CP1-CP3) located in the front compartment with the busbar (BMT) located in the rear compartment and/or the connecting cables located in the intermediate compartment (C).

2. Control system for electrical equipment according to claim 1, **characterized in that** when the cubicle comprises several stages (et1, et2, et3) the entire volume (D) delimited between the front, rear and intermediate compartments (A, A1-A3, B, C) is occupied by one or several extensions (Ae, Be, Ce) of the said front, rear and intermediate compartments (A, A1-A3, B, C).

3. Control system for electrical equipment according to either claim 1 or 2, **characterized in that** each electrical switching unit (CP1 to CP3) is fully withdrawable.

4. Control system for electrical equipment according to one of claims 1 to 3, **characterized in that** it comprises several vertical front compartments (A3, A2, A1).

5. Control system for electrical equipment according to one of claims 1 to 4, **characterized in that** the rear compartment (B) is common with the cubicle.

6. Control system for electrical equipment according to one of claims 1 to 5, **characterized in that** the intermediate compartment (C) is common with the cubicle.

7. Control system for electrical equipment according to one of claims 4 to 6, **characterized in that** it comprises one or a plurality of compartments (A2, A3) with an extension (Ae1, Ae2) and one or a plurality of compartments (A2, A3) without extension among the front compartments (A3, A2, A1), the compartment (s) (A1, A2) with an extension (Ael, Ae2) comprising an extension (Ae1, Ae2) that extends into the said volume (D) until reaching the rear compartment (B) and the compartment(s) without extension (A2, A3) not having an extension.

8. Control system for electrical equipment according to claim 7, **characterized in that** the compartments (A1, A2) with an extension (Ae1, Ae2) at least partially house an electrical protection device (FU1, FU2).

9. Control system for electrical equipment according to claim 6, **characterized in that** the switching units (CP1-CP3) located in the front compartments (A1 to A3) are provided with input connectors (me1-me3) and output connectors (ms1-ms3) that plug into input partition crossings (fe1-fe3) and output partition crossings (fs1-fs3) respectively located on the face opposite the front face (AV), the input partition crossings (fe1-fe3) and the output partition crossings (fs1-fs3) being arranged on each side of a vertical plane and opening up in the rear (B) and intermediate (C) compartments.

10. Control system for electrical equipment according to claim 9, **characterized in that** the input connectors (me1) for switchgear located in front compartments (A1, A2) with an extension (Ael, Ae2) are plugged in with input partition crossings (fe1-fe3) provided in the front compartments and opening up in the rear compartment (B) and **in that** the output connectors (ms1) for the said switchgear are plugged in with output partition crossings (fs1-fs3) provided in the front compartments and opening up in the intermediate compartment (C).

11. Control system for electrical equipment according to claim 9, **characterized in that** input connectors (me1) and output connectors (ms1) for switchgear located in compartments (A2, A3) without an extension can be plugged in with partition crossings (fe3, fs1-fs3) provided in front compartments and opening up in the intermediate compartment (C).

12. Control system for electrical equipment according to claim 8, **characterized in that** the rear compartment (B) comprises an extension (Be) extending into the said volume (D) until it reaches a front compartment (A, A1-A3), the said front compartment (A, A1-A3) not having an extension and being fitted with a switchgear with an input connector (me1) that will be plugged in with an input partition crossing (fe1) located in the front compartment and opening up in the rear compartment (B) and an output connector that will be plugged in with a partition crossing (fs1) provided in the front compartment and opening up in the intermediate compartment (C).
